# EUROPÄISCHE PATENTANMELDUNG

(11) **EP 3 422 510 A1**
(43) Veröffentlichungstag der Anmeldung: **02.01.2019**
(21) Anmeldenummer: 18180272.9
(22) Anmeldetag: 28.06.2018
(51) Int. Cl.: H02G 11/00, H02G 3/04, F16C 23/02

(54) **LEITUNGSZENTRIERUNG IN EINER ROTIERENDEN WELLE**

(30) Priorität: 30.06.2017 DE 102017006193
(71) Anmelder: Senvion GmbH, 22297 Hamburg (DE)
(72) Erfinder: Kaßner, Mirko, 24211 Preetz (DE)
(74) Vertreter: Glawe, Delfs, Moll

(57) **Zusammenfassung**

Die Erfindung betrifft eine Vorrichtung (1) zur Leitungszentrierung in einer rotierenden Welle, eine Anordnung einer Leitung (91) in einer rotierenden Welle umfassend eine solche Vorrichtung, sowie eine Windenergieanlage mit entsprechender Anordnung.

Die Vorrichtung (1) zur Leitungszentrierung in einer rotierenden Hohlwelle umfasst ein Rohr (2), dessen Wand (3) über die gesamte Rohrlänge im Wesentlichen parallel zur Rohrachse geschlitzt ist und welches zur temporären Aufweitung des Schlitzes (4) zum radialen Einbringen einer Leitung (91) in das Rohr (2) verformbar ist. An der Außenseite des Rohrs (2) sind in Längs- und Umfangsrichtung verteilt Borstenbüschel (5) zur Abstützung an der Innenwand der rotierenden Hohlwelle angeordnet.

Die Anordnung umfasst eine Hohlwelle und wenigstens eine durch die Hohlwelle geführte Leitung (91), wobei die wenigstens eine Leitung (91) im Rohr (2) durch eine in der Hohlwelle angeordneten erfindungsgemäßen Vorrichtung (1) geführt ist.

Bei der Windenergieanlage mit einem um eine als Hohlwelle ausgebildeten Rotorwelle drehbar an einer Gondel gelagerten Rotor, wobei wenigstens eine Leitung (91) von dem Rotor durch die Rotorwelle zur Gondel geführt ist, ist die Leitungsführung in der Rotorwelle als erfindungsgemäße Anordnung ausgeführt.

## Beschreibung

Die Erfindung betrifft eine Vorrichtung zur Leitungszentrierung in einer rotierenden Welle, eine Anordnung einer Leitung in einer rotierenden Welle umfassend eine solche Vorrichtung, sowie eine Windenergieanlage mit entsprechender Anordnung.

Bei Anlagen mit zwei relativ gegeneinander rotierenden Teilen ist es regelmäßig erforderlich, Leitungsverbindungen zwischen den beiden Teilen herzustellen, um bspw. elektrische Leistungs- oder Signalübertragung zu ermöglichen. Die entsprechenden Leitungen werden regelmäßig durch die für die Rotation vorgesehenen Wellen zu einer Schleifringanordnung geführt, wo über eine Anordnung von einem, dem einen Teil der Anlage zugeordneten Schleifring und einem, dem anderen Teil der Anlage zugeordneten, auf dem Schleifring aufliegenden Aufnehmer (bspw. einer Kohlebürste) eine elektrische Verbindung zwischen den beiden Teilen der Anlage hergestellt wird. Für Hydraulikleitungen wird häufig auf eine Kaskade von kongruent zur Wellenachse angeordneten Drehkupplungen zurückgegriffen.

Ein Beispiel für Anlagen mit zwei relativ gegeneinander rotierenden Teilen, zwischen denen Leitungsverbindungen geschaffen werden müssen, sind Windenergieanlagen. Bei bekannten Windenergieanlagen lässt sich ein um eine im Wesentlichen horizontale Achse drehbarer Rotor mit daran angeordneten Rotorblättern durch Wind in Rotation versetzen. Der Rotor ist dabei mit einer Rotorwelle in einer Gondel gelagert und - ggf. über ein Getriebe - mit einem Generator zur Umwandlung der Rotationsenergie des Rotors in elektrische Energie verbunden. Bei modernen Windenergieanlagen befinden sich diverse elektrisch und/oder hydraulisch betriebene Komponenten im Rotor selbst (bspw. Sensorik oder Blattverstellantriebe), die über die Rotorwelle mit Steuerungs- und Versorgungskomponenten in der nicht-rotierenden Gondel elektrisch und/oder hydraulisch verbunden werden müssen. Dazu werden die Leitungen durch die als Hohlwelle ausgeführte Rotorwelle zu einem Übergabepunkt - bspw. eine Schleifringanordnung oder Drehkupplungen - geführt.

Durch rotierende Wellen geführte, mitrotierende Leitungen sind aufgrund der auf sie einwirkenden Schwerkraft grundsätzlich walkenden Bewegungen ausgesetzt, da sie aufgrund von Reibung an der Innenwand der Welle zunächst mit der rotierenden Welle über eine gewisse Strecke mitbewegt, dann aber wieder schwerkraftbeding nach unten fallen. Die Leitungsmäntel werden dabei über die Zeit abgerieben, was einen regelmäßigen Austausch der Leitungen erfordert, um einem Ausfall der Leitung und somit ggf. der Anlage als Ganzes vorzubeugen. Außerdem kann die ständige Bewegung bei elektrischen Leitungen zu Kabelbrüchen führen, die ebenfalls regemäßig ein Stillsetzen der Anlage und einen Leitungsaustausch erfordern. Nicht zuletzt können sich die Bewegungen in Axialbewegungen an den Leitungsenden fortpflanzen, welche einen zuverlässigen Anschluss der Leitungen erschweren können.

Es ist Aufgabe der Erfindung, eine Vorrichtung zu schaffen, bei der die aus dem Stand der Technik bekannten Probleme nicht mehr oder nur noch in vermindertem Umfang auftreten können.

Gelöst wird diese Aufgabe durch eine Vorrichtung gemäß dem Hauptanspruch sowie eine Anordnung und eine Windenergieanlage gemäß den nebengeordneten Ansprüchen.

Demnach betrifft die Erfindung eine Vorrichtung zur Leitungszentrierung in einer rotierenden Hohlwelle umfassend ein Rohr, dessen Wand über die gesamte Rohrlänge im Wesentlichen parallel zur Rohrachse geschlitzt ist und welches zur temporären Aufweitung des Schlitzes zum radialen Einbringen einer Leitung in das Rohr ausreichend verformbar ist, wobei an der Außenseite des Rohrs in Längs- und Umfangsrichtung verteilt Borstenbüschel zur Abstützung an dem Innendurchmesser der rotierenden Hohlwelle angeordnet sind.

Weiterhin betrifft die Erfindung eine Anordnung umfassend eine Hohlwelle und wenigstens eine durch die Hohlwelle geführte Leitung, wobei die wenigstens eine Leitung im Rohr einer in der Hohlwelle angeordneten erfindungsgemäßen Vorrichtung geführt ist.

Auch betrifft die Erfindung eine Windenergieanlage mit einem um eine als Hohlwelle ausgebildeten Rotorwelle drehbar an einer Gondel gelagerten Rotor, wobei wenigstens eine Leitung von dem Rotor durch die Rotorwelle zur Gondel geführt ist, und wobei die Leitungsführung in der Rotorwelle als erfindungsgemäße Anordnung ausgeführt ist.

Im Zusammenhang mit der erfindungsgemäßen Vorrichtung wird verschiedentlich auf den "Innendurchmesser der rotierenden Hohlwelle" Bezug genommen, die selbst kein Element der erfindungsgemäßen Vorrichtung ist. Allerdings beinhaltet die ordnungsgemäße Verwendung der erfindungsgemäßen Vorrichtung die Anordnung derselben in einer Hohlwelle, wobei es auf das korrekte Verhältnis der Dimensionen der Vorrichtung zu dem Innendurchmesser der Hohlwelle ankommt. Bei dem Verweis auf den "Innendurchmesser der rotierenden Hohlwelle" handelt es sich also um einen, die Dimensionen der erfindungsgemäßen Vorrichtung mitbestimmenden Nenndurchmesser, der lediglich aus Gründen der besseren Verständlichkeit als Innendurchmesser der rotierenden Hohlwelle bezeichnet ist.

Mit Hilfe der erfindungsgemäßen Vorrichtung ist es möglich, eine oder mehrere Leitungen derart in einer rotierenden Welle zu zentrieren, dass die aus dem Stand der Technik bekannte walkende Bewegung der Leitungen und die damit verbundenen Nachteile vermieden oder zumindest deutlich verringert werden können. Die Leitung(en) ist/sind dabei in einem Rohr angeordnet, welches einen gegenüber dem Innendurchmesser der rotierenden Welle deutlich kleineren Innendurchmesser aufweist, sodass die walkende Bewegung der darin angeordneten Leitungen zumindest deutlich reduziert ist. Es ist aber bevorzugt, wenn der Innendurchmesser des Rohres so an den Außendurchmesser und/oder die Anzahl der Leitungen angepasst ist, dass die Leitungen innerhalb des Rohres bei Rotation keine Relativbewegungen mehr ausführen.

Um die Leitungen einfach in das Rohr einbringen oder bei Bedarf einzelne Leitungen wieder herausbekommen zu können (bspw. zum Austausch einer defekten Leitung), ist die Wand über die gesamte Rohrlänge im Wesentlichen parallel zur Rohrachse geschlitzt. Dieser Schlitz lässt sich bei Bedarf weiten, sodass zumindest jeweils eine Leitung in radialer Richtung des Rohres eingebracht oder herausgenommen werden kann. "Im Wesentlichen" bedeutet in diesem Zusammenhang, dass die Längsrichtung des Schlitzes um weniger als 5 Grad, vorzugsweise um weniger als 3 Grad, weiter vorzugsweise um weniger als 1 Grad von der Längsachse des Rohrs abweicht. Der Schlitz kann auch vollständig parallel zur Längsachse des Rohres sein, wodurch eine besonders einfache und damit kostengünstige Herstellung des Rohres bzw. des Schlitzes möglich ist.

Damit dieses Weiten, nach dem der Schlitz selbstverständlich wieder geschlossen werden muss, um die Leitungen im Innern des Rohres zu halten, möglich ist, kann das Rohr in einer bevorzugten Ausführung ausreichend elastisch ausgestaltet sein, sodass sich das Weiten des Schlitzes allein durch elastische Verformung des Rohrs erreichen lässt. Diese Ausführung bietet den Vorteil, dass sich der Schlitz grundsätzlich selbstständig wieder schließt. Auch kann die elastische Verformbarkeit genutzt werden, um die Leitungen im Rohrinnern durch Klemmwirkung gegen Relativbewegung gegenüber dem Rohr zu sichern. Dazu ist der Rohrinnendurchmesser etwas kleiner als der Außendurchmesser der aufzunehmenden Leitung oder des aufzunehmenden Leitungsbündels zu wählen.

Es ist alternativ aber auch bspw. möglich, eine sich über die Länge des Rohres erstreckende Scharniervorrichtung - bspw. ein Filmscharnier - vorzusehen, über die sich das Rohr aufklappen lässt, um so den Schlitz zu weiten. Schlussendlich ist es auch möglich, das Rohr mit einem zweiten Längsschnitt zu versehen, sodass es in zwei Teile zerlegt werden kann, um so beide Schlitze "zu weiten" und die Leitungen in das Rohr einzubringen; anschließend werden die beiden Teile des Rohrs wieder zusammengeführt. Insbesondere in diesen beiden Fällen ist es bevorzugt, wenn die Vorrichtung Sicherungselemente umfasst, mit denen ein ungewolltes Weiten des oder der Schlitze(s) verhindert wird. Die Sicherungselemente können bspw. Rastelemente oder Flansche zur Verschraubung umfassen.

Bei sämtlichen vorgenannten Ausführungen ist zu beachten, dass die Vorrichtung ein Rohr umfasst, bei dem zwar ein bedarfsweise Weiten des Längsschlitzes ermöglicht sein soll, es gleichzeitig aber auch eine die grundsätzliche Rohrform erhaltene Steifigkeit aufweist.

Das Rohr selbst stützt sich über an der Rohraußenseite angeordnete Borstenbüschel an der Innenwand der rotierenden Hohlwelle, in welche die Vorrichtung bei Benutzung eingeführt ist, ab. Die freien Enden der Borstenbüschel liegen dabei an der Innenwand der rotierenden Hohlwelle an und umfassen jeweils zum Tragen des Gewichts des Rohrs und der darin enthaltenen Leitungen ausreichend steife Borsten. In der Folge kann das Rohr der erfindungsgemäßen Vorrichtung zentrisch in der rotierenden Hohlwelle gehalten werden. Dies setzt natürlich voraus, dass die Borstenbüschel eine ausreichende Anzahl an Borsten umfassen und diese insgesamt eine ausreichende Steifigkeit zum Tragen des Rohrs mit darin befindlichen Leitungen aufweisen. Dem Fachmann ist es aber ohne weiteres möglich, eine geeignete Borstenbüschelkonfiguration ausfindig zu machen.

Es ist bevorzugt, wenn der durch die freien Enden der Borstenbüschel definierte Außendurchmesser der Vorrichtung wenigstens dem Innendurchmesser der rotierenden Hohlwelle - bzw. dem Nenndurchmesser der Vorrichtung - entspricht, vorzugsweise um wenigstens 5%, weiter vorzugsweise um wenigstens 10% größer ist als der Innendurchmesser der rotierenden Welle. In anderen Worten soll der Durchmesser des Umkreises um die Borstenbüschel dem Innendurchmesser der Hohlwelle wenigstens entsprechen, sodass bei einer Rotation der Hohlwelle die Borstenbüschel eine Zentrierung des Rohrs auch zuverlässig sicherstellen können. Es sich sogar bevorzugt, wenn der Durchmesser des Umkreises um etwa 5%, weiter vorzugsweise um etwa 10% größer ist als der Innendurchmesser der rotierenden Hohlwelle. In diesem Fall sind nach Einführung der Vorrichtung in die Hohlwelle zumindest einige der Borsten gebogen und liegen so an der Innenwand der Hohlwelle an, dass sich eine Federungswirkung ergibt. Dadurch können evtl. Vibrationen, die ein Aneinanderreiben

der im Rohr befindlichen Leitung(en) untereinander und/oder mit dem Rohr selbst zur Folge haben können, von dem Rohr wenigstens teilweise ferngehalten werden. Auch kann eine gewisse Toleranz gegenüber einem Überschreiten des Sollmaßes für den Innendurchmesser der Hohlwelle erreicht werden.

Es kann auch vorgesehen sein, dass die Borstenbüschel in einem Winkel ungleich 90° gegenüber der Außenseite des Rohrs angeordnet sind, wobei die Borsten vorzugsweise entgegen einer zu erwartenden Bewegungsrichtung geneigt sind. Durch eine entsprechende Anordnung kann ein Einbringen der Vorrichtung in eine Hohlwelle erleichtert werden, sofern das Einbringen in die angegebene Bewegungsrichtung der Vorrichtung erfolgt.

Es ist bevorzugt, wenn die Borstenbüschel über die Länge und/oder den Umfang des Rohrs regelmäßig verteilt angeordnet sind. Beispielsweise können die Borstenbüschel an den Knotenpunkten eines über die Außenseite des Rohres gelegten virtuellen Rasters angeordnet sein. Durch eine entsprechende Anordnung ergeben sich regelmäßig borstenbüschelfreie Abschnitte in Längsrichtung der Vorrichtung, an denen bspw. einzelne Segmente des Rohres mitsamt der daran angeordneten Borstenbüschel abgetrennt werden können, um die Vorrichtung auf eine gewünschte Länge einzukürzen. Auch lassen sich in entsprechenden Bereichen Kabelbinder anordnen, mit denen das Rohr gegenüber den darin angeordneten Leitungen fixiert und gegen ein ungewolltes Weiten des Schlitzes gesichert werden kann. Es ist selbstverständlich auch möglich, dass auch ohne regelmäßige Anordnung der Borstenbüschel entsprechende borstenbüschelfreie Abschnitte vorgesehen sind.

Es ist bevorzugt, wenn das Rohr auf seiner Innenseite wenigstens einen, sich über die gesamte Länge des Rohrs parallel zur Rohrlängsachse erstreckenden Verjüngungsbereich aufweist. Durch einen solchen Verjüngungsbereich kann bspw. ein Filmscharnier geschaffen werden. Durch einen entsprechenden Verjüngungsbereich kann aber eine elastische Flexibilität des Rohres zum bedarfsweise Weiten des Längsschlitzes auch dann sichergestellt werden, wenn das Rohr im Übrigen eine für die gewünschte Flexibilität zu große Wandstärke aufweist, bspw. um in der Wand die Borstenbüschel befestigen zu können. Sind mehrere Verjüngungsbereiche vorgesehen, sind diese vorzugsweise symmetrisch und/oder gleichmäßig über den Umfang des Rohres verteilt.

Es ist bevorzugt, wenn sämtliche Kanten auf der Innenseite des Rohrs entgratet und/oder mit Radien versehen sind. Neben den Kanten im Bereich des Längsschlitzes sind davon auch sämtliche Kanten in Zusammenhang mit Verjüngungsbereichen erfasst. Indem scharfe Kanten auf der Innenseite des Rohrs vermieden werden, sinkt das Risiko der Beschädigung einer in das Rohr aufgenommenen Leitung.

Vorzugsweise sind an der Außen- und oder Stirnseite des Rohrs Verbindungselemente zur Verbindung der Vorrichtung mit einer in axialer Richtung unmittelbar benachbarten Vorrichtung zu einem Verbund vorgesehen. Durch entsprechende Verbindungselemente lässt sich ein Verbund aus erfindungsgemäßen Vorrichtungen mit beliebiger Länge erreichen, wobei die Einzelvorrichtungen weiterhin eine gut handhabbare Länge aufweisen können. Die Verbindungselemente könnten als Teile eines Konussitzes oder als Teile einer Rastverbindung ausgestaltet sein, die mit entsprechenden Teilen einer benachbarten Vorrichtung zusammenwirken können.

Das Rohr der Vorrichtung kann im Extrusionsverfahren oder als Spritzguss aus Kunststoff hergestellt und anschließend mit Borstenbüschel versehen sein. Für die oben beschriebene Ausführung, bei der das Weiten des Schlitzes durch elastische Verformung des Rohrs erreicht wird, ist der Kunststoff vorzugsweise ausreichend elastisch.

In einem Ausführungsbeispiel beträgt der Innendurchmesser des Rohres 32 mm, wobei die Wandstärke des Rohres bei 4,5 mm liegt. Die Borstenbüschel sind senkrecht zur Außenwand des Rohres angeordnet und weisen Borsten mit Längen von ca. 22 mm auf. Eine Vorrichtung mit den Maßen dieses Ausführungsbeispiels ist damit zur Verwendung in Hohlwellen mit einem tatsächlichen Innendurchmesser von bis zu 85 mm geeignet, wobei die Vorrichtung gemäß diesem Beispiel regemäßig auch bis zu einem Innendurchmesser der Hohlwelle von 80 mm verwendet werden kann. Sämtliche vorgenannten Maße der Vorrichtung können bei Bedarf auch um ±5% oder um ±10% variiert werden, um bspw. andere Nenndurchmesser zu erreichen.

Die Vorrichtung weist in dem genannten Ausführungsbeispiel eine Länge von 0,5 m auf. Sie kann jedoch an den Stirnseiten ihres Rohres mit Verbindungselementes versehen, sodass sie sich mit weiteren entsprechenden Vorrichtungen zu einem Verbund mit einer Gesamtlänge von bspw. 5 bis 8 m verbinden lässt. Zwischenmaße für die Gesamtlänge lassen sich erreichen, indem die äußeren Vorrichtungen dieses Verbunds geeignet eingekürzt werden.

Es ist im Übrigen auch möglich, mehrere Vorrichtungen zur Bildung eines Verbundes hintereinander entlang einer Leitung anzuordnen, ohne dass die Vorrichtungen dabei untereinander verbunden werden müssten. Da sich sämtliche Vorrichtungen selbstständig an der Hohlwelle abstützen werden nach ordnungsgemäßer Einführung eines entsprechenden "losen" Verbundes die erfindungsgemäßen Vorteile dennoch erreicht. Die einzelnen Vorrichtungen des Verbundes können dabei unmittelbar benachbart oder voneinander beabstandet angeordnet sein.

Bei dem Einsatz eines Verbundes aus mehreren erfindungsgemäßen Vorrichtungen in Windenergieanlagen ergibt sich die erforderliche Gesamtlänge häufig aus der Gesamtlänge einer zusammengesetzten Hohlwelle, bspw. aus der Gesamtlänge der Hohlwelle eines Getriebes, welche mit einer Rotorhohlwelle koaxial gekoppelt ist. Insbesondere in einem solchen Fall kann der Innendurchmesser der Hohlwelle variieren, wobei dann vorzugsweise ein Teil der Vorrichtungen gegenüber den anderen Vorrichtungen des Verbundes einen anderen Außendurchmesser aufweist. Es ist aber auch möglich, dass in der Hohlwelle mit dem grundsätzlich größeren Innendurchmesser ein zusätzliches Führungsrohr mit einem ähnlichen Innendurchmesser wie die Getriebehohlwelle angeordnet ist.

Zur Erläuterung der erfindungsgemäßen Anordnung sowie der erfindungsgemäßen Windenergieanlage wird auf die vorstehenden Ausführungen verwiesen.

Die Erfindung wird nun anhand vorteilhafter Ausführungsformen unter Bezugnahme auf die beigefügten Zeichnungen beispielhaft beschrieben. Es zeigen:
- Figur 1:: ein erstes Ausführungsbeispiel einer erfindungsgemäßen Vorrichtung;
- Figur 2:: eine schematische Darstellung der Verwendung der Vorrichtung aus Figur 1;
- Figur 3:: ein zweites Ausführungsbeispiel einer erfindungsgemäßen Vorrichtung; und
- Figur 4:: eine schematische Schnittdarstellung der Vorrichtung aus Figur 3.

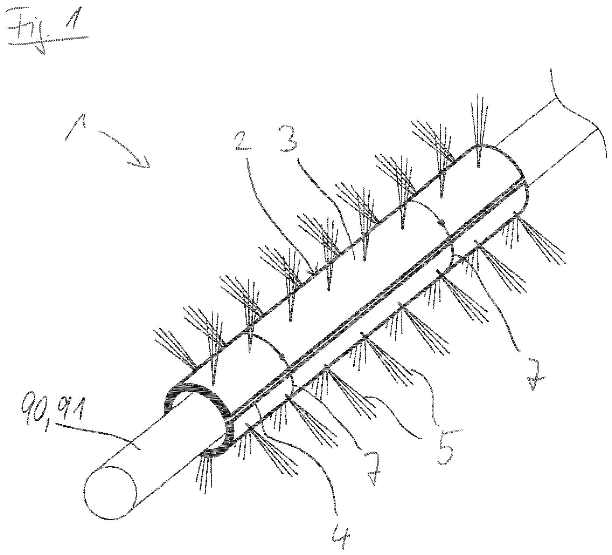

In Figur 1 ist ein erstes Ausführungsbeispiel einer erfindungsgemäßen Vorrichtung 1 dargestellt.

Die Vorrichtung 1 umfasst ein Rohr 2 aus Kunststoff, dessen Wand 3 über die gesamte Rohrlänge parallel zur Rohrachse mit einem Schlitz 4 versehen ist. Der Kunststoff ist dabei derart elastisch gewählt, dass sich der Schlitz 4 zum radialen Einbringen eines Leitungsbündels 90 oder einer einzelnen Leitung 91 in das Rohr 2 verformen lässt.

An der Außenseite des Rohrs 2 sind in einem regelmäßigen Raster in Längs- und Umfangsrichtung verteilt Borstenbüschel 5 angeordnet, die senkrecht zur Außenseite des Rohrs 2 abstehen.

Die längsten Borsten der Borstenbüschel 5 definieren den Außendurchmesser der Vorrichtung 1. Dieser Außendurchmesser ist so gewählt, dass er um 5% größer ist als der Innendurchmesser derjenigen Hohlwelle, in welche die Vorrichtung 1 eingeführt werden soll. Nach dem Einführen in eben diese Hohlwelle wird das Leitungsbündel 90 von den Borstenbüschein 5, die an der Innenwand der Hohlwelle anliegen, zentriert gehalten.

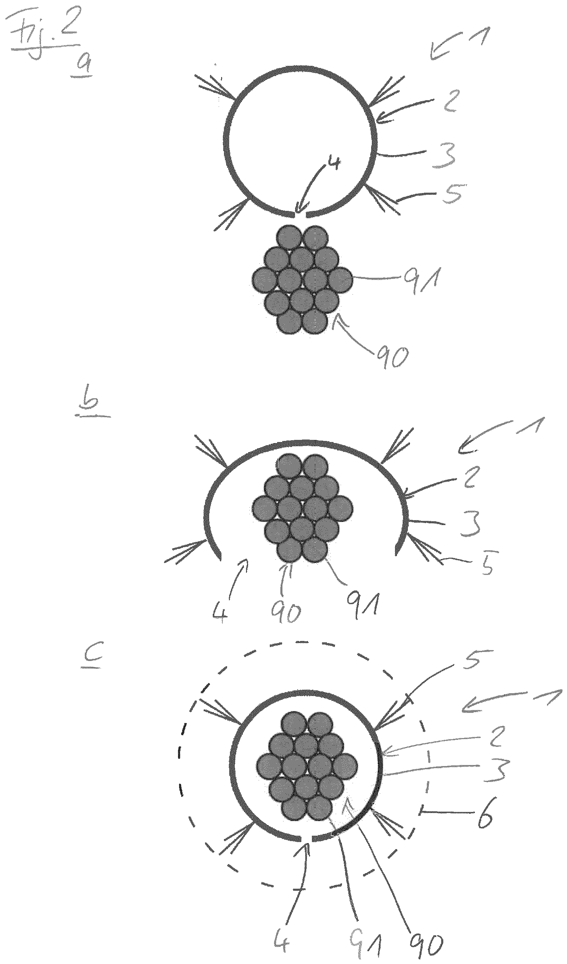

In Figur 2 ist das Einbringen von Leitungen 91 bzw. eines Leitungsbündels in die Vorrichtung 1 gemäß Figur 1 schematisch dargestellt. Ausgehend von einem Ausgangszustand, in dem das Rohr 2 unverformt ist (Figur 2a), wird der Schlitz 4 durch elastische Verformung der Rohrwand 3 derart erweitert, dass die zu einem Leitungsbündel 90 zusammengelegten Leitungen 91 in radialer Richtung zur Rohrachse in das Rohr 2 eingebracht werden können (Figur 2b). Anschließend kehrt das Rohr 2 in seine ursprüngliche Form zurück, womit das Rohr 2 das Leitungsbündel 90 umschließt (Figur 2c).

In Figur 2c ist auch der durch die freien Enden der Borstenbüschel 5 - genauer deren jeweils längsten Borsten - definierte Außendurchmesser 6 dargestellt. Das Rohr 2 kann in der in Figur 2c dargestellten Konfiguration mit Kabelbindern 7 gesichert werden, die an borstenbüschelfreien Abschnitten um das Rohr 2 gelegt sind (vgl. Figur 1).

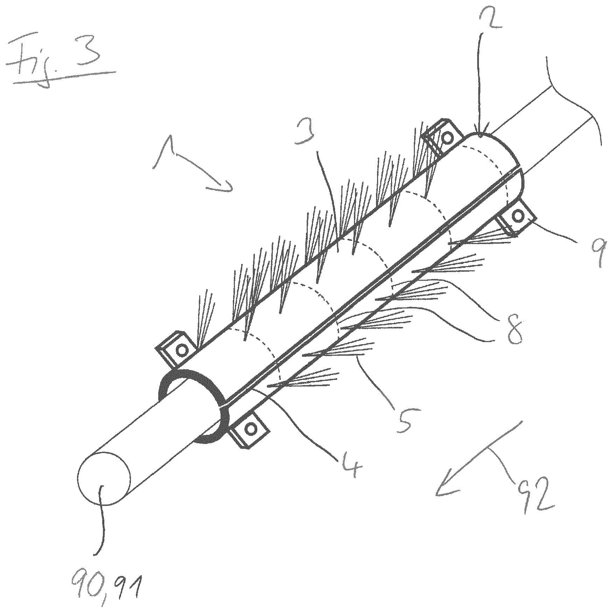

In Figur 3 ist ein zweites Ausführungsbeispiel einer erfindungsgemäßen Vorrichtung 1 gezeigt, welches auf dem ersten Ausführungsbeispiel aufbaut. Im Folgenden werden daher nur die Unterschiede zu dem ersten Ausführungsbeispiel erläutert und im Weiteren auf die vorstehenden Ausführungen zu Figuren 1 und 2 verwiesen.

Die Borstenbüschel 5 sind beim Ausführungsbeispiel gemäß Figur 3 gegenüber der Außenseite des Rohrs 2 nicht mehr senkrecht, sondern vielmehr in einem Winkel kleiner 90° in Richtung der Rotorachse geneigt angeordnet. Durch eine entsprechende Anordnung der Borstenbüschel 5 wird das Einführen der Vorrichtung 1 in eine Hohlwelle in die, durch Pfeil 92 angedeutete Richtung erleichtert.

Darüber hinaus weist die Vorrichtung 1 noch eine Mehrzahl von borstenbüschelfreien Abschnitten 8 auf, an denen die Vorrichtung 1 bei Bedarf aufgetrennt werden kann. In der Folge ist es möglich, die Länge der Vorrichtung 1 auf ein gewünschtes Maß zu reduzieren. In eben diesen Abschnitten 8 können auch Kabelbinder 7 zur Sicherung der Vorrichtung 1 an dem Leitungsbündel 90 angeordnet werden (vgl. Figur 1).

An den beiden Enden des Rohres 2 sind außerdem Verbindungselemente 9 vorgesehen, über die sich die Vorrichtung 1 mit benachbarten Vorrichtungen entsprechend der dargestellten Vorrichtung 1 verbinden lässt. Die Verbindungselemente 9 sind als Vorsprünge mit Durchgangsloch ausgeführt, in die Verbindungsklammern (nicht dargestellt) eingeführt werden können.

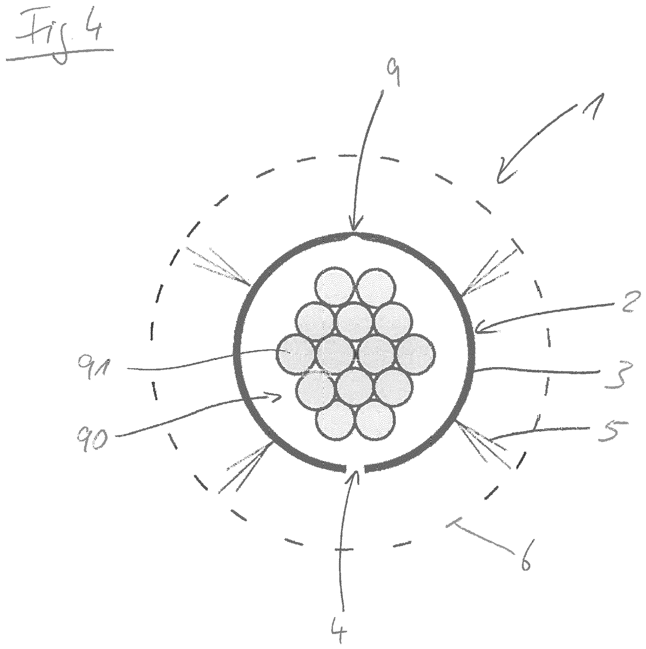

Wie in der Schnittdarstellung gemäß Figur 4 zu erkennen, weist die Wand 3 des Rohres 2 an der dem Schlitz 4 in Umfangsrichtung gegenüberliegenden Stelle innen einen Verjüngungsbereich 9 auf, der sich über die gesamte Länge des Rohres 2 erstreckt. Durch diesen Verjüngungsbereich 9 wird das Weiten des Schlitzes 4 durch elastische Verformung des Rohrs 2 erleichtert. Die Kanten im Bereich des Verjüngungsbereichs 9 sind sämtlich abgerundet um Beschädigungen an den Leitungen 91 des Leitungsbündels 90 zu vermeiden.

Während das Rohr 2 des ersten Ausführungsbeispiels gemäß Figuren 1 und 2 in einem Extrusionsverfahren hergestellt werden kann, handelt es sich bei dem Rohr des zweiten Ausführungsbeispiels um ein Spritzgussteil. Beiden Ausführungen ist gemein, dass die Borstenbüschel 5 nach Fertigung des Rohrs 2 an diesem angebracht werden. Weiterhin sind die Rohre 2 aus derart elastischem Kunststoff, dass die im Zusammenhang mit Figur 2 beschriebene Aufweitung des Schlitzes 4 beschädigungsfrei möglich ist.

## Patentansprüche

1. Vorrichtung (1) zur Leitungszentrierung in einer rotierenden Hohlwelle umfassend ein Rohr (2), dessen Wand (3) über die gesamte Rohrlänge im Wesentlichen parallel zur Rohrachse geschlitzt ist und welches zur temporären Aufweitung des Schlitzes (4) zum radialen Einbringen einer Leitung (91) in das Rohr (2) verformbar ist, wobei an der Außenseite des Rohrs (2) in Längs- und Umfangsrichtung verteilt Borstenbüschel (5) zur Abstützung an der Innenwand der rotierenden Hohlwelle angeordnet sind.

2. Vorrichtung nach Anspruch 1,
**dadurch gekennzeichnet, dass**
das Rohr (2) zur temporären Aufweitung des Schlitzes (4) zum radialen Einbringen einer Leitung (91) in das Rohr (2) elastisch verformbar ist.

3. Vorrichtung nach Anspruch 1,
**dadurch gekennzeichnet, dass**
der durch die freien Enden der Borstenbüschel (5) definierte Außendurchmesser (6) der Vorrichtung (1) wenigstens dem Innendurchmesser der rotierenden Welle entspricht, vorzugsweise um wenigstens 5%, weiter vorzugsweise um wenigstens 10% größer ist als der Innendurchmesser der rotierenden Hohlwelle.

4. Vorrichtung nach einem der vorhergehenden Ansprüche,
**dadurch gekennzeichnet, dass**
die Borstenbüschel (5) in einem Winkel ungleich 90° gegenüber der Außenseite des Rohrs (2) angeordnet sind, wobei die Borsten vorzugsweise entgegen einer zu erwartenden Bewegungsrichtung (92) geneigt sind.

5. Vorrichtung nach einem der vorhergehenden Ansprüche,
**dadurch gekennzeichnet, dass**
die Borstenbüschel (5) über die Länge und/oder den Umfang des Rohrs (2) regelmäßig verteilt angeordnet sind.

6. Vorrichtung nach einem der vorhergehenden Ansprüche,
**dadurch gekennzeichnet, dass**
das Rohr (2) auf seiner Innenseite wenigstens einen, sich über die gesamte Länge des Rohrs (2) parallel zur Rohrlängsachse erstreckenden Verjüngungsbereich (9) aufweist.

7. Vorrichtung nach Anspruch 6,
**dadurch gekennzeichnet, dass**
mehrere Verjüngungsbereiche (9) vorgesehen sind, die symmetrisch und/oder gleichmäßig über den Umfang des Rohres verteilt sind.

8. Vorrichtung nach einem der vorhergehenden Ansprüche,
**dadurch gekennzeichnet, dass**
sämtliche Kanten auf der Innenseite des Rohrs (2) entgratet und/oder mit Radien versehen sind.

9. Vorrichtung nach einem der vorhergehenden Ansprüche,
**dadurch gekennzeichnet, dass**
an der Außen- und/oder Stirnseite des Rohrs (2) Verbindungselemente (9) zur Verbindung der Vorrichtung (1) mit einer in axialer Richtung unmittelbar benachbarten Vorrichtung (1) vorgesehen sind.

10. Vorrichtung nach einem der vorhergehenden Ansprüche,
**dadurch gekennzeichnet, dass**
die Vorrichtung (1) in Längsrichtung borstenbüschelfreie Abschnitte (8) zur wahlweisen Abtrennung einzelner Rohrsegmente und/oder Fixierung mit Kabelbindern aufweist.

11. Vorrichtung nach einem der vorhergehenden Ansprüche,
**dadurch gekennzeichnet, dass**
das Rohr (2) im Extrusions- oder Spritzguss aus Kunststoff hergestellt und anschließend mit Borstenbüschel (5) versehen ist.

12. Anordnung umfassend eine Hohlwelle und wenigstens eine durch die Hohlwelle geführte Leitung (91),
**dadurch gekennzeichnet, dass**
die wenigstens eine Leitung (91) im Rohr (2) einer in der Hohlwelle angeordneten Vorrichtung (1) gemäß einem der vorstehenden Ansprüche geführt ist.

13. Anordnung nach Anspruch 12,
**dadurch gekennzeichnet, dass**
das der Innendurchmesser des Rohres (2) der Vorrichtung kleiner gleich dem Durchmesser der einen darin geführten Leitung (91) oder dem Durchmesser des darin geführten Bündels aus mehreren Leitungen (90, 91) ist.

14. Anordnung nach Anspruch 12 oder 13,
**dadurch gekennzeichnet, dass**
die Anordnung einen Verbund von mehreren entlang der wenigstens einen Leitung (91) hintereinander angeordnete Vorrichtungen (1) umfasst.

15. Windenergieanlage mit einem um eine als Hohlwelle ausgebildeten Rotorwelle drehbar an einer Gondel gelagerten Rotor, wobei wenigstens eine Leitung (91) von dem Rotor durch die Rotorwelle zur Gondel geführt ist,
**dadurch gekennzeichnet, dass**
die Leitungsführung in der Rotorwelle als Anordnung gemäß einem der Ansprüche 12 bis 14 ausgeführt ist.
